# EUROPÄISCHE PATENTANMELDUNG

(11) **EP 0 649 210 A1**
(43) Veröffentlichungstag der Anmeldung: **19.04.1995**
(21) Anmeldenummer: 94111370.6
(22) Anmeldetag: 21.07.1994
(51) Int. Cl.: H02J 13/00, H05B 39/04

(54) **Anordnung für Funkrundsteuerempfänger in Lichtmasten**

(30) Priorität: 13.10.1993 DE 4335640
(71) Anmelder: DeTeWe FUNKWERK KOPENICK GmbH, D-12557 Berlin (DE)
(72) Erfinder: Drescher, Jürgen, D-12557 Berlin (DE)

(57) **Zusammenfassung**

Für die Anordnung von Funkrundsteuerempfängern in Lichtmasten wird vorgeschlagen, das Auswertteil des Funkrundsteuerempfängers im Klemmen-Sicherungsgerät oder Tarifzähler und das Empfangsteil in der Leuchte des Lichtmastes zu integrieren.

## Beschreibung

Die Erfindung bezieht sich auf eine Anordnung für Funkrundsteuerempfänger, die aus räumlich voneinander trennbaren Empfangs- und Auswertteilen bestehen, in Lichtmasten.

Es ist bekannt, über Langwellensender eine Normalfrequenz und eine Zeitinformation auszusenden, um beispielsweise in Elektrizitäts-Versorgungsunternehmen (EVU) Schaltuhren zu synchronisieren, in Kommunen Ampelanlagen zu steuern usw. (telekom praxis, Heft 1, 1993, Seiten 25 bis 37).

Da Langwellen-Frequenzen in Gebäude eindringen, sind einfache Antennenformen möglich und preiswerte Empfänger herstellbar. Weil die Bodenwelle im Langwellen-Frequenzbereich zuverlässig in Entfernungen bis ca. 500 km empfangen werden kann, bietet sich der Langwellen-Frequenzbereich für eine Funkrundsteuerung an. Die bekannte und drahtgebundene Rundsteuertechnik ist eine Einwegübertragung der Art, daß z. B. von einem EVU eine Zu- oder Abschaltung von Verbrauchern gesteuert wird. Für die Funkübertragung derartiger Steuersignale ist ein schmalbandiger Funkkanal geeignet.

Eine Funkrundsteueranordnung ist Gegenstand der Patentanmeldung P 43 23 319.8. In ihr wird vorgeschlagen, die Funkrundsteuerempfänger aus einem Empfangsteil und einem Auswertteil zusammenzusetzen, die räumlich getrennt voneinander anordbar sind.

Rundsteuerempfänger werden allgemein als eigenständige Geräte dem Tarifzähler oder dem Klemmen-Sicherungsgerät eines zu steuernden Lichtmastes beigestellt. Dies bedeutet, daß jeweils ein eigenes Gerätegehäuse mit entsprechenden Montagemöglichkeiten sowie ggf. ein Schutz gegen unbefugtes Eingreifen für einen Rundsteuerempfänger vorzusehen sind.

Der Erfindung lag die Aufgabe zugrunde, für Funkrundsteuerempfänger für Lichtmaste eine einfachere Lösung hinsichtlich des Gerätegehäuses und der damit verbundenen Prüf- und Montageaufwendungen zu schaffen.

Diese Aufgabe ist durch die Erfindung gelöst, wie sie im Kennzeichnungsteil des ersten Patentanspruches dargelegt ist. Weitere vorteilhafte Maßnahmen sind Gegenstand des Unteranspruches.

Nachfolgend wird die Erfindung anhand einer aus zwei Figuren bestehenden Zeichnung näher erläutert. In der Zeichnung zeigen die
- Fig. 1: das Blockschaltbild eines Funkrundsteuerempfängers, und die
- Fig. 2: das Blockschaltbild eines zu steuernden Lichtmastes mit integrietem Funkrundsteuerempfänger.

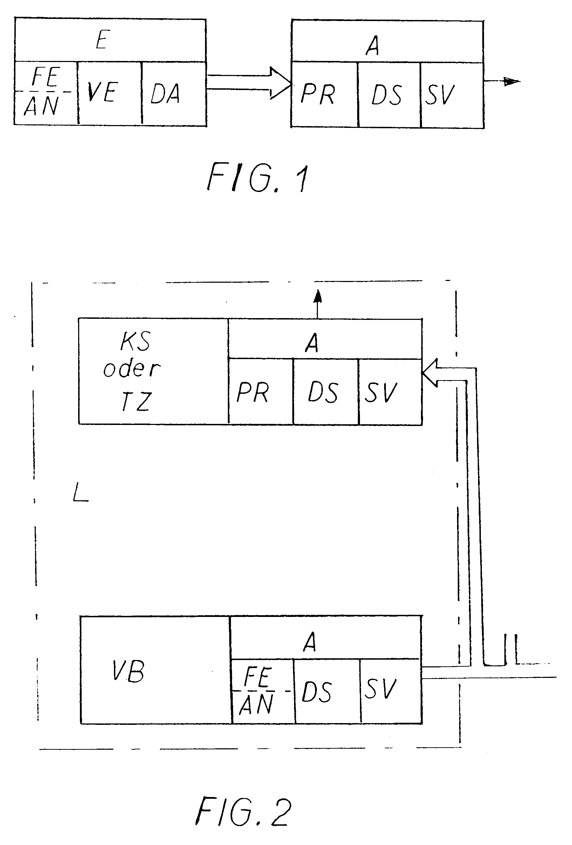

Der Funkrundsteuerempfänger nach der Fig. 1 besteht aus einem Empfangsteil E und einem Auswertteil A.

Das Empfangsteil E enthält den Funkempfänger FE einschließlich der Antenne AN, einen Verstärker VE und einen universellen Datenausgang DA mit hohem Ausgangspegel.

Das Auswertteil A umfaßt einen Prozessor PR mit Mikrorechner, die Datensenke DS und die Stromversorgung SV. Das Auswertteil A steuert nachgeschaltete Einrichtungen und/oder Geräte.

Das Empfangsteil E und das Auswertteil A werden räumlich voneinander derart getrennt, daß dem Klemmen-Sicherungsgerät KS des Lichtmastes L oder dem Tarifzähler TZ der Auswertteil A zugeordnet ist (Fig. 2). Dabei ist das Auswertteil A im Klemmen-Sicherungsgerät KS oder im Tarifzähler TZ integriert.

Entsprechend ist das Empfangsteil E als Baugruppe dem eigentlichen Verbraucher, der Leuchte VB, zugeordnet.

Durch diese Anordnung lassen sich vorteilhafterweise die Geräte-, Prüf- und Montagekosten reduzieren.

So benötigt z.B. bei einer Reihe von Lichtmasten zur Straßenbeleuchtung lediglich eine Leuchte VB das Empfangsteil E , das dann die in den weiteren Lichtmasten vorhandenen Auswertteile A steuert.

## Patentansprüche

1. Anordnung für Funkrundsteuerempfänger in Lichtmasten, deren Rundsteuerempfänger aus räumlich voneinander getrennten Empfangs- und Auswertteilen bestehen, dadurch gekennzeichnet, daß das Auswertteil (A) im Klemmen-Sicherungsgerät (KS) oder im Tarifzäler (TZ) und das Empfangsteil (E) in der Leuchte (VB) des Lichtmastes (L) integriert werden.

2. Anordnung nach Anspruch 1, dadurch gekennzeichnet, daß bei einer Reihe von Lichtmasten (L) nur einem Lichtmast (L) ein Empfangsteil (E) zugeordnet ist, das die Auswerteteile (A) aller weiteren Lichtmaste (L) steuert.
